# EUROPEAN PATENT APPLICATION

(11) **EP 4 711 183 A1**
(43) Date of publication of application: **18.03.2026**
(21) Application number: 23936644.6
(22) Date of filing: 11.05.2023
(51) Int. Cl.: B60L 7/14, B60L 7/22

(54) **ELECTRIC VEHICLE**

(71) Applicant: Hitachi Industrial Products, Ltd., Tokyo 101-0021 (JP)
(72) Inventor: HIGASHIMATA, Itaru, Tokyo 101-0021 (JP); FURUKAWA, Isao, Tokyo 101-0021 (JP); AMEMIYA, Yoshiki, Tokyo 101-0021 (JP); ABE, Yusuke, Tokyo 101-0021 (JP)
(74) Representative: MERH-IP Matias Erny Reichl Hoffmann Patentanwälte PartG mbB
(86) International application number: PCT/JP2023/017801
(87) International publication number: WO 2024/232096

(57) **Abstract**

An electric vehicle comprises a motor and a storage battery, and travels using the motor as a power source driven by electric power supplied from the storage battery. During regenerative braking, the storage battery is charged by regenerative electric power generated by the motor. The electric vehicle includes a power converter, a bidirectional power conversion device, and a regenerative brake circuit. The electric vehicle is configured such that a first operating voltage at which the regenerative brake circuit starts a power processing operation is higher than a second operating voltage at which the bidirectional power conversion device starts charging power control.

## Description

### Technical Field

The present invention relates to an electric vehicle.

### Background Art

An electric vehicle of Patent Document 1 includes an engine, a generator, a power converter, an electric motor, and a power processing unit. The power processing unit is a device that converts and consumes regenerative energy (electrical energy) from an electric motor (induction machine) into heat, and can acquire a desired regenerative braking force by power consumption control.

### Citation list

### Patent Literature

Patent Document 1: Japanese Patent Application Laid-Open No.2020-124001

### Summary of Invention

### Technical Problem

The present inventors are considering an electric vehicle having a storage battery in which electric power for driving a motor is stored and a regenerative brake circuit. In this electric vehicle, the charging power of the storage battery is controlled during the regenerative operation. If the regenerative power is greater than the rechargeable power of the storage battery, the surplus power is consumed by the regenerative brake circuit.

In an electric vehicle (for example, an electric dump truck), the regenerative power is not constant due to disturbances in the road surface because it runs on uneven terrain. In addition, the rechargeable power of the storage battery is not constant because it depends on the SOC (State Of Charge). For this reason, if the regenerative power is not appropriately distributed between the charging power of the storage battery and the power consumption of the regenerative brake circuit, the DC bus voltage may become unstable.

The present invention has been made to solve the above problem. That is, one of the objects of the present invention is to provide an electric vehicle capable of reducing the possibility that the DC bus voltage becomes unstable.

### Solution to Problem

In order to solve the above problem, the electric vehicle of the present invention comprises a motor and a storage battery, the electric vehicle is driven using the motor as a power source by electric power supplied from the storage battery, and is capable of charging the storage battery with regenerative electric power generated by the motor during regenerative braking, and the electric vehicle comprises:
a power converter configured to convert input direct current (DC) power into alternating current (AC) power and output it to the motor, and to convert regenerative electric power input from the motor into direct current (DC) power and output it;
a bidirectional power conversion device connected to the power converter, configured to operate in either a state in which the DC power is input from the storage battery, its voltage is converted, and the converted voltage DC power is output to the power converter, or a state in which the DC power is input from the power converter, its voltage is converted, and the converted voltage DC power is output to the storage battery for charging power control;
a regenerative brake circuit configured to perform a power processing operation to store or consume the DC power input from the power converter,
wherein
a first operating voltage at which the regenerative brake circuit starts the power processing operation is higher than a second operating voltage at which the bidirectional power conversion device starts the charging power control.

### Advantageous Effect

According to the present invention, the possibility that the DC bus voltage becomes unstable can be reduced.

### Brief Description of Drawings

[FIG. 1] Fig. 1 is a block diagram showing an example of the internal configuration of a dump truck.
[FIG. 2A] Fig. 2A is a graph showing an example of changes in regenerative power, charging power, power consumption of a regenerative brake circuit, and DC bus voltage.
[FIG. 2B] Fig. 2B is a graph showing an example of changes in the regenerative power, the charging power, the power consumption of the regenerative brake circuit, and the DC bus voltage.
[FIG. 3A] Fig. 3A is a graph showing an example of changes in the regenerative power, the charging power, the power consumption of the regenerative brake circuit, and the DC bus voltage.
[FIG. 3B] Fig. 3B is a graph showing an example of changes in the regenerative power, the charging power, the power consumption of the regenerative brake circuit, and the DC bus voltage.
[FIG. 4] Fig. 4 is a graph showing an example of changes in the regenerative power, the charging power, the power consumption of the regenerative brake circuit, and the DC bus voltage.
[FIG. 5] Fig. 5 is a flowchart showing a processing flow executed by the control device of the dump truck.

### Description of Embodiments

Hereinafter, each embodiment of the present invention will be described with reference to the drawings. In all the drawings of the embodiment, the same or corresponding portions may be denoted by the same numerals.

### <<First Embodiment>>

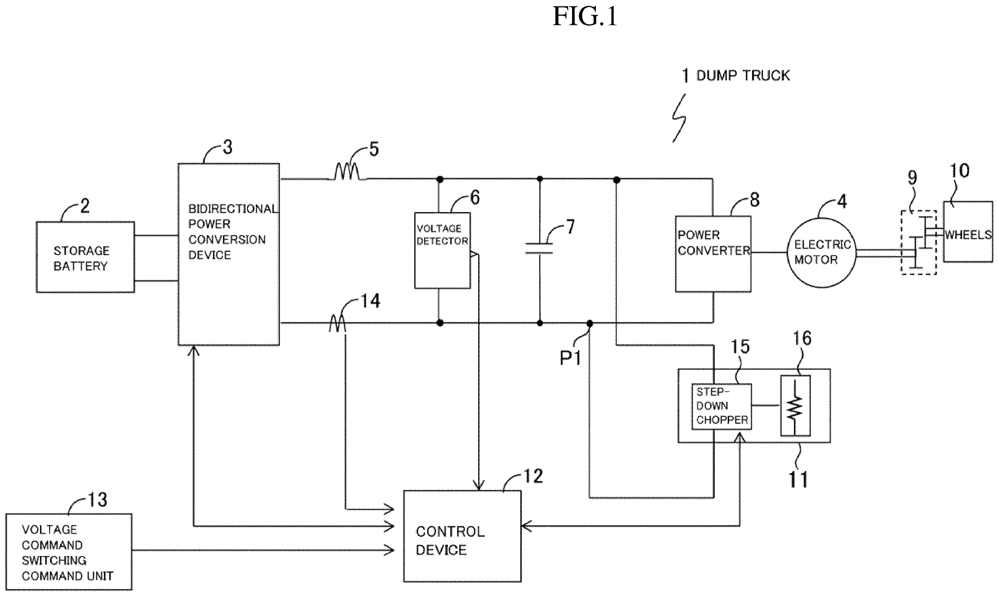

A dump truck 1 which is an example of an electric vehicle according to a first embodiment of the present invention will be described. FIG. 1 is a block diagram showing an internal configuration example of the dump truck 1. As shown in FIG. 1, the dump truck 1 includes a storage battery 2 as a power source, a bidirectional power conversion device 3 connected to the storage battery 2, an electric motor 4, a DC reactor 5, a voltage detector 6, a DC bus capacitor 7, a power converter 8, a gear 9, wheels 10, a regenerative brake circuit 11, a control device 12, a voltage command switching command unit 13, and a DC bus current sensor 14.

The dump truck 1 is an electric dump truck that is an electric vehicle that travels on an electric motor 4 driven by electric power supplied from the storage battery 2 as a power source.

The storage battery 2 is a battery module including an assembled battery configured by a plurality of secondary batteries capable of charging and discharging.

The bidirectional power conversion device 3 is connected to the storage battery 2. The bidirectional power conversion device 3 is connected to the power converter 8 via a power line. The bidirectional power conversion device 3 is controlled by the control device 12.

The bidirectional power conversion device 3 is, for example, a bidirectional DCDC converter (bidirectional chopper), and converts, when the dump truck 1 is operated with the power of the storage battery 2, the DC power input from the storage battery 2 into a voltage according to the voltage command and output it. The bidirectional power conversion device 3 converts, when performing a charging operation (charging power control) of the storage battery 2, the DC power input from the power converter 8 into a voltage according to the voltage command and outputs it to the storage battery 2.

The DC reactor 5 smooths the current. The voltage detector 6 is connected to both terminals of the bidirectional power conversion device 3. When the voltage detector 6 detects the DC voltage (DC bus voltage), the detected DC voltage value is transmitted to the control device 12.

The DC bus capacitor 7 is connected in parallel to the bidirectional power conversion device 3. The DC bus capacitor 7 charges and smooths the DC voltage supplied from the bidirectional power conversion device 3.

The power converter 8 is connected in parallel to the DC bus capacitor 7 and converts the smoothed DC power output from the DC bus capacitor 7 into AC power.

The electric motor 4 is driven by AC power output from the power converter 8 and drives the gear 9. The wheels 10 are driven by the electric motor 4 via gear 9. As a result, the dump truck 1 travels. It should be noted that the electric motor 4 operates as a generator during regenerative braking.

The DC bus current sensor 14 is connected between one terminal of the bidirectional power conversion device 3 and the connection point P1. The DC bus current sensor 14 outputs the DC current value input to the bidirectional power conversion device 3 detected between the bidirectional power conversion device 3 and the connection point P1 to the control device 12.

The regenerative brake circuit 11 includes a step-down chopper 15 and a brake resistor 16. The regenerative brake circuit 11 converts and consumes electric power into thermal energy by the brake resistor 16. The step-down chopper 15 can control the power consumption or current (voltage applied to the brake resistor 16) of the brake resistor 16. The step-down chopper 15 operates in accordance with the command of the control device 12 and performs a power consumption operation in which a current is passed through the brake resistor 16 to consume power. It should be noted that the power consumption operation of the regenerative brake circuit 11 may also be referred to as a "power processing operation" for convenience.

The control device 12 receives a DC current value from the DC bus current sensor 14 and a DC voltage value from the voltage detector 6.

The control device 12 controls the bidirectional power conversion device 3 and the regenerative brake circuit 11. The control device 12 is, for example, an ECU (Electronic Control Unit). The ECU is an electronic control unit that includes a microcomputer as the main part, and is also called a controller. The microcomputer includes a CPU, a ROM, a RAM, and an interface (I / F). The CPU implements various functions by executing instructions (programs, routines) stored in the ROM. The control device 12 can also be configured partly or in whole by hardware. For example, the control device 12 may realize at least a part of various functions of the control device 12 using an FPGA (Field Programmable Gate Array) or the like.

The voltage command switching command unit 13 instructs the control device 12 to switch the operation of the bidirectional power conversion device 3. The voltage command switching command unit 13 includes, for example, an ECU.

The basic operation of the dump truck 1 will be described.

### <During powered operation>

During powered operation, the dump truck 1 discharges the storage battery 2 with the bidirectional power conversion device 3, and drives the electric motor 4 with the power of the storage battery 2 supplied via the power converter 8 to travel. Specifically, the dump truck 1 outputs DC power from the storage battery 2 via the bidirectional power conversion device 3. The DC power output by the bidirectional power conversion device 3 is smoothed by the DC bus capacitor 7 and converted into AC power by the power converter 8. This AC power is output to the electric motor 4. The electric motor 4 connected to the power converter 8 is connected to the wheels 10 via the gear 9. When the electric motor 4 drives the gear 9, the wheels 10 rotate, and the dump truck 1 moves forward or backward, or accelerates.

### <During regenerative braking>

The dump truck 1 is braked by a regenerative brake that generates the desired braking force by using the electric motor 4 as a generator in response to commands from an ECU (not shown) that controls the electric motor, converting kinetic energy into electrical energy." The dump truck 1 performs regenerative braking in response to, for example, a command from the ECU based on the driver's operation of the operating device of the auxiliary brake (retard brake) (not shown).

The electric power generated by the electric motor 4 by regenerative braking (power generated) is referred to as "regenerative power". The regenerative power is input to the power converter 8, converted from AC power to DC power by the power converter 8, and output. The regenerative power is used for the power supplied to the storage battery 2 and is consumed by the regenerative brake circuit 11 as necessary. The dump truck 1 charges the storage battery 2 by regenerative power by the bidirectional power conversion device 3. The dump truck 1 consumes the surplus regenerative power that exceeds the rechargeable power of the regenerative power by the regenerative brake circuit 11.

### <Summary of the present invention>

An overview of the present invention will be described. Since the dump truck 1 travels on rough terrain and travels on slopes with varying gradients, the regenerative power is constantly changing. Further, since the rechargeable power of the storage battery 2 depends on the SOC (State of Charge), the chargeable power also continues to change constantly. Thus, in a system in which the regenerative power and the rechargeable power are constantly changing, it is necessary to optimally distribute the regenerative power of the electric motor 4 to the charging power of the storage battery 2 and the power consumption of the regenerative brake circuit 11, and to stably control the DC bus voltage.

Therefore, in dump truck 1 according to the first embodiment, the bidirectional power conversion device 3 separates the operating voltage at which the charging operation (charging power control of the battery 2) begins from the operating voltage at which the regenerative brake circuit 11 begins its power consumption operation. Specifically, in the dump track 1, the operating voltage of the regenerative brake circuit 11 is set higher than the operating voltage of the bidirectional power conversion device 3. It should be noted that the operating voltage of the regenerative brake circuit 11 may also be referred to as the "first operating voltage" for convenience. The operating voltage of the charging operation of the bidirectional power conversion device 3 may also be referred to as the "second operating voltage" for convenience. Further, the operating voltage of the charging operation of the bidirectional power conversion device 3 may also be referred to as the "charging power control operating voltage".

Thereby, when the regenerative power is smaller than the rechargeable power of the storage battery 2, the voltage of the DC bus can be stably controlled without fluctuating by the charging power control of the bidirectional power conversion device 3.

On the other hand, when the regenerative power is larger than the rechargeable power of the storage battery 2, surplus power is generated. This surplus power is stored in the DC bus capacitor 7, and the DC bus voltage rises. When the DC bus voltage reaches the operating voltage of the regenerative brake circuit 11, the regenerative brake circuit 11 activates and consumes the excess power, thereby suppressing the rise in DC bus voltage.

Further, as will be described later, the dump truck 1 according to the embodiment can stably control the DC bus voltage even when the regenerative power decreases sharply when the regenerative brake circuit 11 is operating and consuming surplus power. The dump truck 1 according to the first embodiment can increase the power consumption of the regenerative brake circuit 11 when the rechargeable power decreases sharply, and the DC bus voltage can be stably controlled. From the above, the dump truck 1 according to the first embodiment can stably control the DC bus voltage.

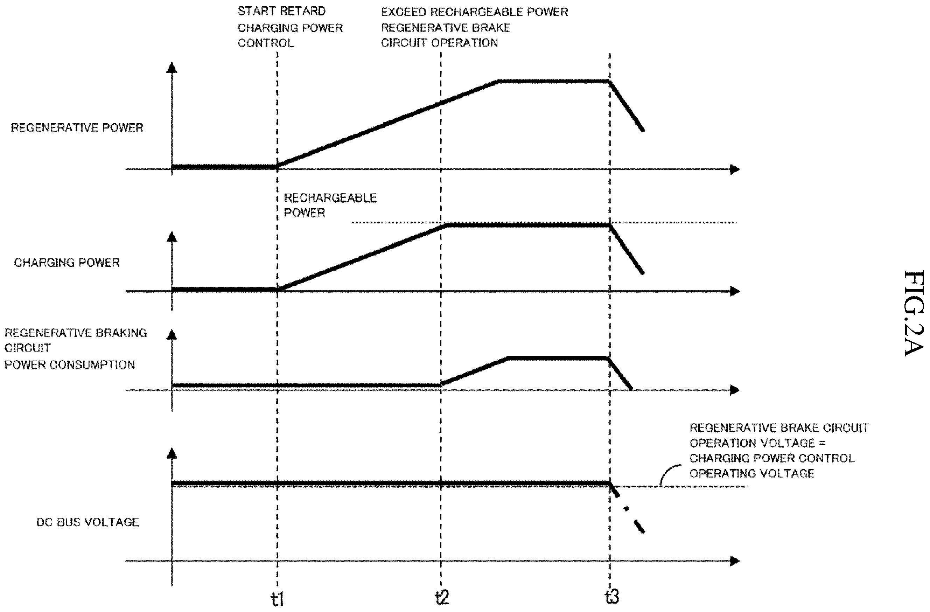

Hereinafter, the action effect of the present invention will be described in more detail. FIG. 2A is a graph showing an example of changes in regenerative power, charging power, power consumption of the regenerative brake circuit 11, and DC bus voltage when the operating voltage of the regenerative brake circuit 11 and the charging power control operating voltage are the same.

When retard is started at time t1 while the dump truck 1 is traveling, a braking force by regenerative braking is generated, and at the same time, regenerative power is generated by the electric motor 4.

During the period from time t1 to the time immediately before time t2, the regenerative power rises, and when the regenerative power exceeds the rechargeable power (rechargeable power that is the maximum power that can be input to the storage battery 2) at time t2, the regenerative brake circuit 11 is activated.

From time t2, the dump truck 1 distributes the rechargeable power of the regenerative power to the storage battery 2, charges the storage battery 2, and consumes the regenerative power in excess of the rechargeable power of the regenerative power in the regenerative brake circuit 11.

An event occurs in which the regenerative power decreases sharply at time t3. In this case, because the regenerative power is not properly distributed between the power used to charge the storage battery 2 and the power consumed by the regenerative brake circuit 11, excessive charging and consumption beyond the available regenerative power occur, resulting in a drop in the DC bus voltage.

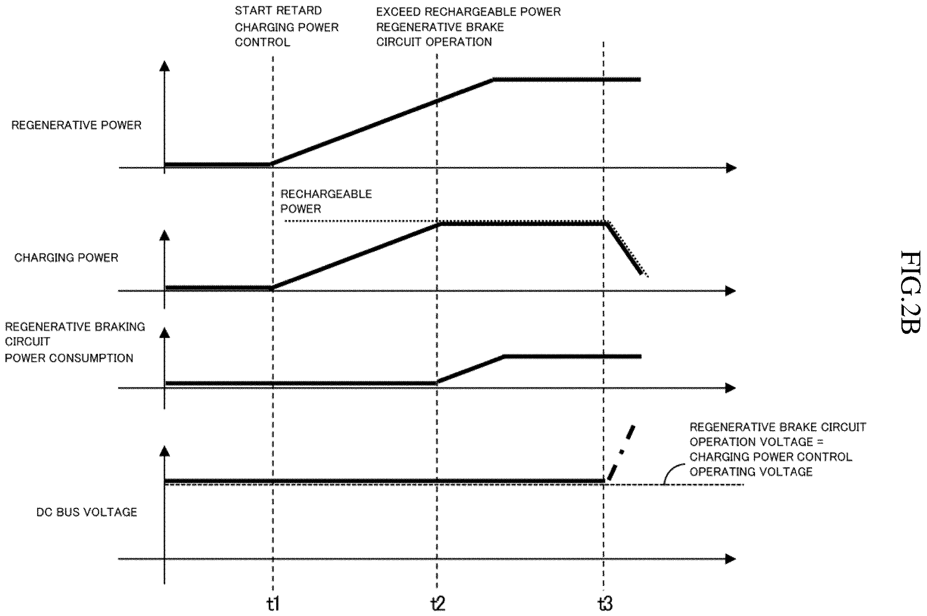

FIG. 2B is a graph illustrating another example of changes in regenerative power, charging power, power consumption of the regenerative brake circuit 11, and DC bus voltage when the operating voltage of the regenerative brake circuit 11 and the charging power control operating voltage are the same.

When retard is started at time t1 while the dump truck 1 is traveling, a braking force by regenerative braking is generated, and at the same time, regenerative power is generated from the electric motor 4.

During the period from time t1 to the time immediately before time t2, the regenerative power rises, and when the regenerative power exceeds the rechargeable power (rechargeable power that is the maximum power that can be input to the storage battery 2) at time t2, the regenerative brake circuit 11 is activated.

From time t2, the dump truck 1 distributes the rechargeable power of the regenerative power to the storage battery 2, charges the storage battery 2, and consumes the regenerative power in excess of the rechargeable power of the regenerative power in the regenerative brake circuit 11.

At time t3, when the SOC reaches a predetermined value, the chargeable power decreases sharply. In this case, the regenerative power cannot be properly distributed, and the regenerative power cannot be properly consumed, so the DC bus voltage rises.

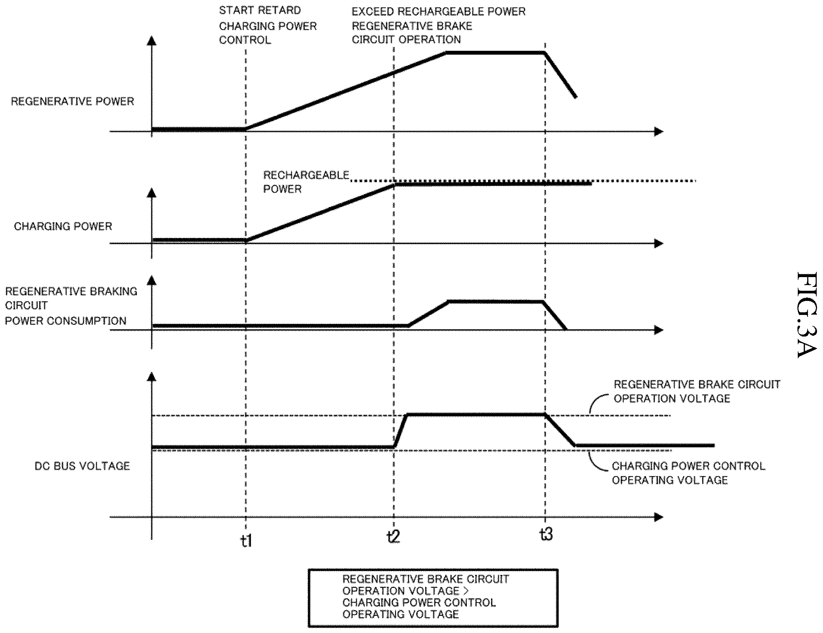

FIG. 3A is a graph showing an example of changes in regenerative power, charging power, power consumption of the regenerative brake circuit 11, and DC bus voltage when the operating voltage of the regenerative brake circuit 11 is greater than the charging power control operating voltage.

When retard is started at time t1 while the dump truck 1 is traveling, a braking force by regenerative braking is generated, and at the same time, regenerative power is generated from the electric motor 4.

During the period from time t1 to the time immediately before time t2, when regenerative power is generated, the DC bus voltage reaches the charging power control operating voltage, so that charging operation to the storage battery 2 of the bidirectional power conversion device 3 is started, and the charging power of the storage battery 2 also increases as the regenerative power rises.

When the regenerative power exceeds the rechargeable power (rechargeable power that is the maximum power that can be input to the storage battery 2) at time t2, the DC bus voltage rises, and when the operating voltage of the regenerative brake circuit 11 is reached, the regenerative brake circuit 11 is activated. The regenerative brake circuit 11 starts power consumption operation, and the power consumption in the regenerative brake circuit 11 increases and remains stable. When the regenerative brake circuit 11 starts power consumption operation, the dump truck 1 distributes the rechargeable power of the regenerative power to the storage battery 2, charges the storage battery 2, and consumes the regenerative power exceeding the rechargeable power of the regenerative power in the regenerative brake circuit 11.

At time t3, an event occurs in which the regenerative power decreases rapidly. At this time, since the operating voltage of the regenerative brake circuit 11 is lower than the DC bus voltage, the power consumption operation of the regenerative brake circuit 11 is stopped, and the power consumption in the regenerative brake circuit 11 is suppressed, the DC bus voltage gradually decreases, and when it drops to the charging power control operating voltage, it becomes constant and stabilizes.

According to FIG. 3A, the dump truck 1 according to the embodiment can stably control the DC bus voltage by suppressing power consumption with the regenerative brake circuit 11 when the regenerative power decreases rapidly.

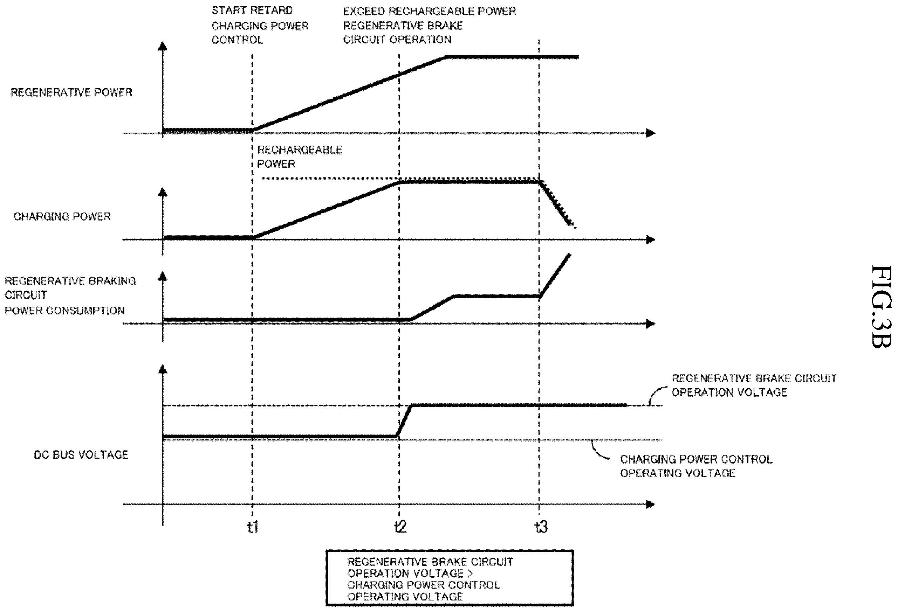

Fig. 3B is a graph showing another example of changes in regenerative power, charging power, power consumption by the regenerative brake circuit 11, and DC bus voltage when the operating voltage of the regenerative brake circuit 11 is set higher than the charging power control operating voltage.

When retard is started at time t1 while the dump truck 1 is traveling, a braking force by regenerative braking is generated, and at the same time, regenerative power is generated from the electric motor 4.

During the period from time t1 to the time immediately before time t2, when regenerative power is generated, the DC bus voltage reaches the charging power control operating voltage, so that charging operation to the storage battery 2 of the bidirectional power conversion device 3 is started, and the charging power of the storage battery 2 also increases as the regenerative power rises.

When the regenerative power exceeds the rechargeable power (rechargeable power that is the maximum power that can be input to the storage battery 2) at time t2, the DC bus voltage rises, and when the operating voltage of the regenerative brake circuit 11 is reached, the regenerative brake circuit 11 is activated. The regenerative brake circuit 11 starts power consumption operation, and the power consumption in the regenerative brake circuit 11 increases and remains stable. When the regenerative brake circuit 11 starts power consumption operation, the dump truck 1 distributes the rechargeable power of the regenerative power to the storage battery 2, charges the storage battery 2, and consumes the regenerative power exceeding the rechargeable power of the regenerative power in the regenerative brake circuit 11.

At time t3, when the SOC of the storage battery 2 reaches a predetermined value, the rechargeable power decreases sharply. In this case, since the power consumption of the regenerative brake circuit 11 increases by that amount, the DC bus voltage is controlled constantly.

According to FIG. 3B, in the dump truck 1 according to the embodiment, even when the chargeable power decreases sharply, the power consumption of the regenerative brake circuit 11 increases by that amount, and the DC bus voltage is controlled constantly.

### <Effect>

As described above, the dump truck 1 according to the first embodiment of the present invention appropriately distributes the regenerative power into the power for charging and the power for the regenerative brake circuit 11, so that the DC bus voltage can be stably controlled.

### <<Second embodiment>>

The dump truck 1 according to the second embodiment of the present invention will be described. The dump truck 1 according to the second embodiment has a difference from the dump truck 1 according to the first embodiment only in the following respects.

The potential difference between the bidirectional power conversion device 3 is calculated by detecting / estimating the DC current, and the operating voltage of the regenerative brake circuit 11 is corrected according to the potential difference. Thereby, the DC bus voltage can be stably controlled.

Hereinafter, this difference will be mainly described.

Even when the operating voltage of the bidirectional power conversion device 3 and the operating voltage of the regenerative brake circuit 11 are separated, a potential difference may occur between the bidirectional power conversion device 3 and the regenerative brake circuit 11 due to the influence of impedance mounted on the DC bus.

In this case, a more stable control of the DC bus voltage can be realized by calculating the potential difference between the bidirectional power conversion device 3 by detecting / estimating the DC current, and correcting the operating voltage of the regenerative brake circuit 11 according to the potential difference.

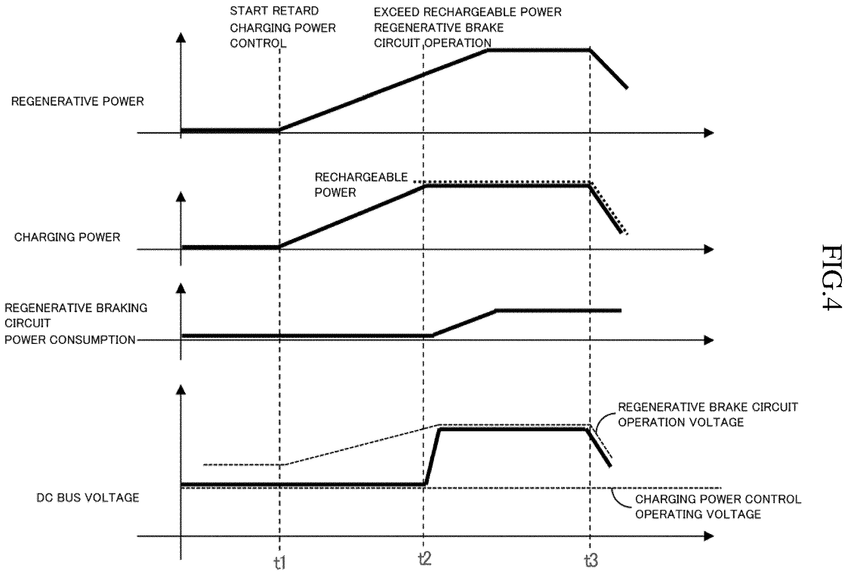

FIG. 4 is a graph illustrating an example of changes in regenerative power, charging power, power consumption by the regenerative brake circuit 11, and DC bus voltage, in a case where the operating voltage of the regenerative brake circuit 11 is set higher than the charging power control operating voltage, the potential difference between the regenerative brake circuit 11 and the bidirectional power conversion device 3 is calculated based on detection or estimation of the DC current, and the operating voltage of the regenerative brake circuit 11 is corrected in accordance with the calculated potential difference.

As shown in FIG. 4, when retard is started at time t1 while the dump truck 1 is running, a braking force by regenerative braking is generated, and at the same time, regenerative power is generated from the electric motor 4.

During the period from time t1 to the time immediately before time t2, when regenerative power is generated, the DC bus voltage reaches the charging power control operating voltage, so that charging operation to the storage battery 2 of the bidirectional power conversion device 3 is started, and the charging power of the storage battery 2 also increases as the regenerative power rises. Further, during this period, the potential difference between the bidirectional power conversion device 3 is calculated by detecting / estimating the DC current, and the operating voltage of the regenerative brake circuit 11 is corrected (added) according to the potential difference. Therefore, the operating voltage of the regenerative brake circuit 11 increases from time t1.

When the regenerative power exceeds the rechargeable power (rechargeable power that is the maximum power that can be input to the storage battery 2) at time t2, the DC bus voltage rises, and when the operating voltage of the regenerative brake circuit 11 is reached, the regenerative brake circuit 11 is activated. The regenerative brake circuit 11 starts power consumption operation, and the power consumption in the regenerative brake circuit 11 increases and remains stable. When the regenerative brake circuit 11 starts power consumption operation, the dump truck 1 distributes the rechargeable power of the regenerative power to the storage battery 2, charges the storage battery 2, and consumes the regenerative power exceeding the rechargeable power of the regenerative power in the regenerative brake circuit 11.

At time t3, when the regenerative power decreases and the SOC reaches a predetermined value, the chargeable power decreases sharply and the potential difference decreases. In this case, since the operating voltage of the regenerative brake circuit 11 decreases, the regenerative brake circuit 11 operates, and the DC bus voltage decreases stably.

According to the dump truck 1 according to the second embodiment, the DC bus voltage can be more stably controlled between the operating voltage of the regenerative brake circuit 11 and the operating voltage of the charging power control.

### <Specific operation>

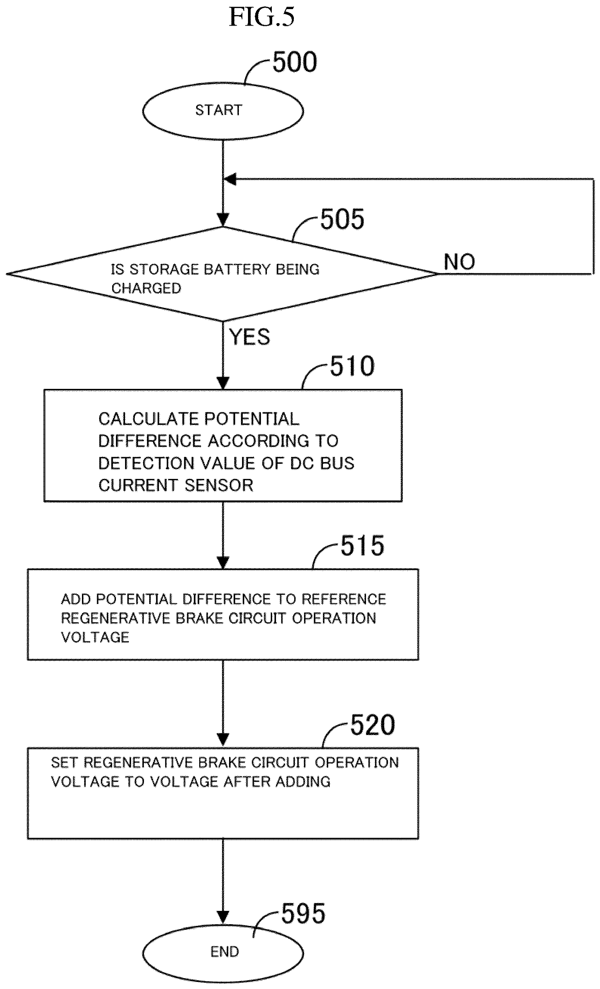

Specific operation of the dump truck 1 according to the second embodiment will be described. FIG. 5 is a flowchart showing a process flow executed by the control device 12 of the dump truck 1.

The control device 12 starts processing from step 500 in FIG. 5 and proceeds to step 505 to determine whether or not the storage battery 2 is being charged.

When the storage battery 2 is not charging, the control device 12 makes a "NO" determination at step 505 and executes the process of step 705 again. When the storage battery 2 is charging, the control device 12 makes a "YES" determination at step 505 and executes the processes of steps 510 to 520 described below in order.

Step 510: The control device 12 calculates (estimates) the potential difference between the bidirectional power conversion device 3 and the regenerative brake circuit 11 according to the detection value of the DC bus current sensor. For example, the control device 12 calculates the potential difference by referring to a map specifying the relationship between the current and the potential difference. The potential difference is calculated (estimated) so that the greater the current, the greater the potential difference.

Step 515: The control device 12 adds a potential difference to a predetermined reference operating voltage of the regenerative brake circuit 11. The predetermined reference operating voltage is set to be larger than, for example, the charging power control operating voltage.

Step 520: The control device 12 sets the operating voltage of the regenerative brake circuit 11 to the voltage after adding the potential difference to the predetermined reference operating voltage.

Thereafter, the control device 12 proceeds to step 595 and temporarily terminates the processing flow.

It should be noted that the control device 12 may perform the following steps A instead of steps 515 and 520.

Step A: The control device 12 increases or decreases the operating voltage based on the potential difference.

### <Effect>

As described above, since the dump truck 1 according to the second embodiment of the present invention appropriately distributes the regenerative power between the power for charging and the power for the regenerative brake circuit 11 in consideration of the potential difference, the dump truck 1 can stably control the DC voltage of the DC bus between the operating voltage of the regenerative brake circuit 11 and the operating voltage of the charging power control.

### <<Modification>>

The present invention is not limited to each of the above embodiments, and various modifications can be employed within the scope of the present invention. Furthermore, each of the above embodiments can be combined with each other as long as they do not deviate from the scope of the present invention. The regenerative brake circuit 11 may be a power storage circuit including a storage battery 2 for driving a device separate from the electric motor 4. In this case, the regenerative brake circuit 11 stores a part of the regenerative power in the regenerative brake circuit 11 by performing an operation of storing power by charging power to the storage battery 2 instead of an operation that consumes power. It should be noted that the operation in which the regenerative brake circuit 11 stores power may also be referred to as "power processing operation" for convenience.

### Reference Signs List

1: dump truck
2: battery
3: bidirectional power conversion device
4: electric motor
5: DC reactor
6: voltage detector
7: DC bus capacitor
8: power converter
9: gear
10: wheels
11: regenerative brake circuit
12: control device
13: voltage command switching command unit
14: DC bus current sensor

## Claims

1. An electric vehicle comprising a motor and a storage battery, the electric vehicle being driven using the motor as a power source by electric power supplied from the storage battery, and being capable of charging the storage battery with regenerative electric power generated by the motor during regenerative braking, the electric vehicle comprising:
a power converter configured to convert input direct current (DC) power into alternating current (AC) power and output it to the motor, and to convert regenerative electric power input from the motor into direct current (DC) power and output it;
a bidirectional power conversion device connected to the power converter, configured to operate in either a state in which the DC power is input from the storage battery, its voltage is converted, and the converted voltage DC power is output to the power converter, or a state in which the DC power is input from the power converter, its voltage is converted, and the converted voltage DC power is output to the storage battery for charging power control;
a regenerative brake circuit configured to perform a power processing operation to store or consume the DC power input from the power converter,
wherein
a first operating voltage at which the regenerative brake circuit starts the power processing operation is higher than a second operating voltage at which the bidirectional power conversion device starts the charging power control.

2. The electric vehicle according to claim 1, comprising:
a voltage detection device configured to detect a DC bus voltage; and
a control device configured to control the operation of the regenerative brake circuit and the bidirectional power conversion device based on the DC bus voltage detected by the voltage detection device,
wherein
the control device is configured to control the regenerative brake circuit to perform the power processing operation when the DC bus voltage reaches the first operating voltage.

3. The electric vehicle according to claim 2,
wherein
the control device is configured to control the regenerative brake circuit to stop the power processing operation when the DC bus voltage becomes lower than the first operating voltage.

4. The electric vehicle according to claim 1, comprising:
a control device configured to modify the first operating voltage at which the power processing operation is started; and
a current detection device configured to detect a current input to the bidirectional power conversion device,
wherein
the control device is configured to:
calculate a potential difference between the bidirectional power conversion device and the regenerative brake circuit based on the current detected by the current detection device; and
correct the first operating voltage in accordance with the potential difference.

5. The electric vehicle according to claim 4,
wherein
the control device is configured to correct the first operating voltage by setting the first operating voltage to a voltage obtained by adding the potential difference to a reference operating voltage of the regenerative brake circuit.

6. The electric vehicle according to claim 4,
wherein
the control device is configured to:
determine whether the storage battery is being charged; and
execute a process for correcting the first operating voltage when the storage battery is being charged.

7. The electric vehicle according to claim 1,
wherein
the regenerative brake circuit is a circuit for consuming electric power, and performs the power processing operation to consume the DC power input from the power converter.

8. The electric vehicle according to claim 1,
wherein,
the regenerative brake circuit is a circuit for storing electric power, and performs the power processing operation to store the DC power input from the power converter.
